(19) Europäisches Patentamt
European Patent Office
Office européen des brevets

(11) Veröffentlichungsnummer: **0 150 470**
**B1**

(12) **EUROPÄISCHE PATENTSCHRIFT**

(45) Veröffentlichungstag der Patentschrift: **19.09.90**

(51) Int. Cl.$^5$: **B 60 J 7/05**

(21) Anmeldenummer: **84116061.7**

(22) Anmeldetag: **21.12.84**

(54) **Fahrzeugdach.**

(30) Priorität: **28.12.83 JP 200820/84 u**

(43) Veröffentlichungstag der Anmeldung:
**07.08.85 Patentblatt 85/32**

(45) Bekanntmachung des Hinweises auf die Patenterteilung:
**19.09.90 Patentblatt 90/38**

(84) Benannte Vertragsstaaten:
**DE FR GB IT NL SE**

(56) Entgegenhaltungen:
**AT-B- 296 782**
**CH-A- 409 647**
**DE-A-2 648 664**
**DE-A-2 923 904**
**US-A-4 379 586**

(73) Patentinhaber: **Webasto AG Fahrzeugtechnik**
**Kraillingerstrasse 5**
**D-8035 Stockdorf (DE)**

(72) Erfinder: **Sumida, Koji**
**1128-1, Ooazaakiyama Shiraki-cho, Asakita-ku**
**Hiroshima-shi Hiroshima-ken (JP)**

**EP 0 150 470 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft ein Fahrzeugdach mit einem in einer festen Dachfläche ausgebildeten Dachausschnitt, einem Deckel, der aus einer Schließstellung, in welcher er den Dachausschnitt verschließt, mittels einer Ausstellvorrichtung mit seinem hinteren Ende über die feste Dachfläche in eine Stellung ausstellbar ist, in welcher das hintere Deckelende in Längsrichtung über dem Dachausschnitt steht, einem in Fahrzeuglängsrichtung im wesentlichen parallel zur festen Dachfläche verschiebbaren Himmelteil, und einer Mitnehmereinrichtung, die beim Ausstellen des Deckels das Himmelteil um eine begrenzte Strecke selbsttätig zurückschliebt.

Bei einem als Hebedach ausgebildeten Dach dieser Art ist es bekannt (AT—B—296782), an dem vorderen rand der Dachöffnung eine Verstärkungsschiene anzubringen, von deren hinterem Rand die Vorderkante des verschiebbaren und mit einer Perforation versehenen Himmelteils auch dann nach hinten in Abstand liegt, wenn das Himmelteil bei geschlossenem Deckel seine vordere Endstellung einnimmt. Der Deckel weist vorne ein Verstärkungsprofil mit einem Steg auf, gegen den sich bei geschlossenem Deckel das verschiebbare Himmelteil mit seinem vorderen Ende von unten anlegt. Die Ausstellvorrichtung ist von Hand durch Zurückschieben einer Steuerstange betätigbar, die sich entlang der Längssymetrieachse des verschiebbaren Himmelteils und des Deckels erstreckt. Beim Ausstellen des Deckels wird das Himmelteil von einem mit der Steuerstange verbundenen Mitnehmer selbsttätig um ein vorbestimmtes Stück nach hinten mitgenommen, wodurch zwischen der Vorderkante des Himmelteils und der Hinterkante des Steges des Deckelverstärkungsprofils ein Lüftungsspalt freigelegt wird.

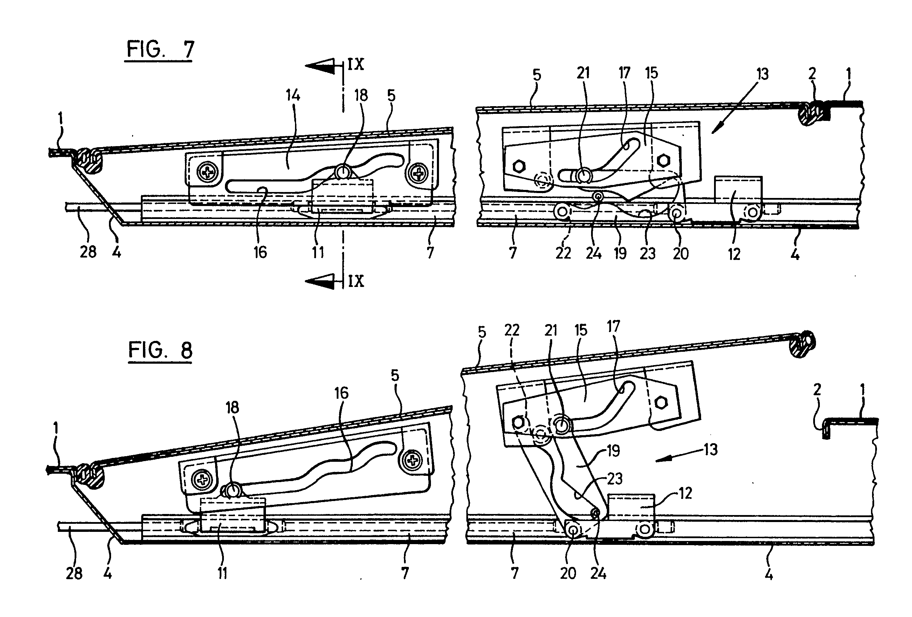

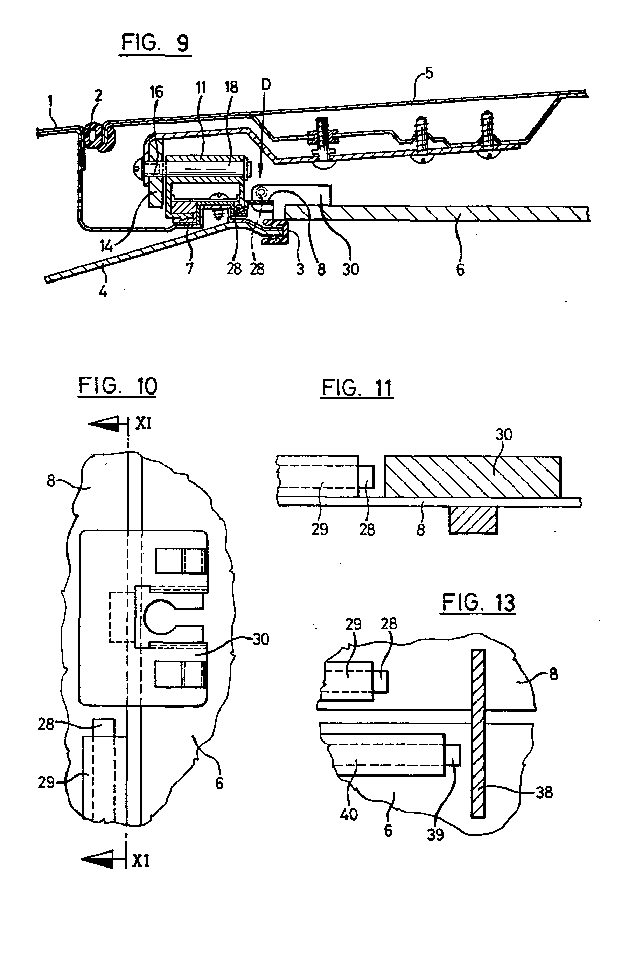

Es sind ferner Schiebe- Hebedächer der eingangs genannten Art bekannt (DE—A—2 923 904 und US—A—4 379 586), die einen Dachrahmen aufweisen, der eine unter dem Dachausschnitt liegende Rahmenöffnung begrenzt, welche von dem verschiebbaren Himmelteil verschlossen wird, wenn dieses in seiner vorderen Endstellung steht. Das Himmelteil kann geschlossen ausgebildet sein (Figuren 9 und 10 der DE—A—2 923 904 und US—A—4 379 586). In diesem Fall erfolgt nach dem Ausstellen des Deckels eine Entlüftung der Fahrgastzelle erst, nachdem zusätzlich das verschiebbare Himmelteil, ausgehend von seiner Schließstellung, von Hand mindestens teilweise zurückgeschoben ist. Die Notwendigkeit, das verschiebbare Himmelteil für Entlüftungszwecke bei ausgestelltem Deckel zurückzuschieben, entfällt, wenn in gleichfalls bekannter Weise (Figuren 6—8 der DE—A—2 923 904) das Himmelteil mit ständig offenen Lüftungsschlitzen versehen ist. Offene Lüftungsschlitze sind jedoch in der Praxis schon aus esthetischen Gründen häufig unerwünscht. Bei Verwendung eines lichtdurchlässigen Deckels kann in der Deckelschließstellung ferner über die Lüftungsschlitze unerwünscht Licht in das Wageninnere dringen.

Des weiteren ist es bekannt (DE—A—2 648 664), das verschiebbare Himmelteil aus zwei miteinander gelinkig verbundenen Abschnitten aufzubauen, von denen der hintere an der Ausstellbewegung des Deckels teilnimmt. Dies führt jedoch zu einer relativ aufwendigen Konstruktion.

Der Erfindung liegt die Aufgabe zugrunde, ein Fahrzeugdach der eingangs genannten Art zu schaffen, das für eine Lüften bei ausgestelltem Deckel keine ständig offenen Lüftungsschlitze in dem verschiebbaren Himmelteil benötigt, für eine esthetische Raumwirkung im Fahrzeuginneren sorgt, insgesamt mit relativ niedrigem Aufwand gefertigt und montiert werden kann, und gleichwohl besonders bequem zu bedienen ist.

Ausgehend von einem Fahrzeugdach mit einem in einer festen Dachfläche ausgebildeten Dachausschnitt, einem Deckel, der aus einer Schließstellung, in welcher er den Dachausschnitt verschließt, mittels einer Ausstellvorrichtung mit seinem hinteren Ende über die feste Dachfläche in eine Stellung ausstellbar ist, in welcher das hintere Deckelende in Längsrichtung über dem Dachausschnitt steht, einem in Fahrzeuglängsrichtung im wesentlichen parallel zur festen Dachfläche verschiebbaren Himmelteil, und einer Mitnehmereinrichtung, die beim Ausstellen des Deckels das Himmelteil um eine begrenzte Strecke selbststätig zurückschiebt (AT—B—296782), wird diese Aufgabe erfindungsgemäß dadurch gelöst, daß eine Ausstellvorrichtung an jeder Längsseite des Dachausschnitts verschiebbar montiert und mit einem Ende eines drucksteifen Antriebskabels verbunden ist, daß die Mitnehmereinrichtung eine Antriebsverbindung zwischen jedem der beiden Antriebskabel und dem verschiebbaren Himmelteil herstellen, daß ein Dachrahmen vorgesehen ist, der eine unter dem Dachausschnitt liegende Rahmenöffnung begrenzt, daß das verschiebbare Himmelteil in seiner vorderen Endstellung die Rahmenöffnung verschließt, und daß das verschiebbare Himmelteil durch das beim Ausstellen des Deckels bewirkte selbsttätige Zurückschieben die Rahmenöffnung mindestens teilweise freilegt. Entsprechend einer abgewandelten erfindungsgemäßen Lösung ist ein Fahrzeugdach mit einem in einer festen Dachfläche ausgebildeten Dachausschnitt, einem Deckel, der aus einer Schließstellung, in welcher er den Dachausschnitt verschließt, mittels einer Ausstellvorrichtung mit seinem hinteren Ende über die feste Dachfläche in eine Stellung ausstellbar ist, in welcher das hintere Deckelende in Längsrichtung über den Dachausschnitt steht, einem in Fahrzeuglängsrichtung im wesentlichen parallel zur festen Dachfläche verschiebbaren, mit mindestens einer Lüftungsöffnung versehenen Himmelteil, und einer Mitnehmereinrichtung, die beim Ausstellen des Deckels für eine selbsttätige Freigabe eines Lüftungsschlitzes sorgt, dadurch gekennzeichnet, daß in dem verschiebbaren Himmelteil als Lüftungsöffnung mindestens ein Lüftungsschlitzausgebildet ist, dem eine Abdeckung zugeordnet ist, die zwischen einer den Lüftungsschlitz freigebenden Stellung und einer den Lüftungsschlitz verschließenden Stellung verstellbar ist, daß eine Ausstellvorrichtung an jeder Längsseite des Dachausschnitts verschiebbar montiert und mit einem Ende eines drucksteifen Antriebskabels verbunden ist, daß die Mitnehmereinrichtung eine Antriebsverbindung zwischen mindestens einem der beiden Antriebskabel und der verstellbaren Abdeckung herstellt, daß ein Dachrahmen vorgesehen ist, der eine unter dem Dachausschnitt liegende Rahmenöffnung begrenzt, und daß das verschiebbare Himmelteil in seiner vorderen Endstellung die Rahmenöffnung verschließt.

Bei dem Fahrzeugdach nach der Erfindung ist eine wirkungsvolle Entlüftung gewährleistet, ohne daß sich der Fahrer oder der Beifahrer zusätzlich um das verschiebbare Himmelteil bzw. die verstellbare Abdeckung zu kümmern braucht. In der Schließstellung des Himmelteils wird der Durchtritt von Luft und Licht durch das Dach selbst dann verhindert, wenn der Deckel aus lichtdurchlässigem Werkstoff gefertigt ist.

Verlaufen in bekannter Weise (DE—A—2 923 904) zu beiden Seiten des Dachausschnitts Führungsschienen, entlang denen Gleitstücke verschiebbar geführt sind, die über jeweils eine der Ausstellvorrichtungen mit dem Deckel verbunden und über die Antriebskabel an einen Antrieb angekoppelt sind, wird in weiterer Ausgestaltung der Erfindung ein fertigungs- und montagetechnisch besonders einfacher Aufbau erhalten, wenn das freie Ende beider Antriebskabel bzw. mindestens des einen Antriebskabels mit der Mitnehmereinrichtung zusammenwirkt.

Bevorzugte Weiterbildungen der Erfindung ergeben sich aus den Unteransprüchen 4 bis 8.

Bevorzugte Ausführungsbeispiele der Erfindung sind im folgenden anhand der Zeichnungen näher erläutert. Es zeigen:

Fig. 1 bis 4 schematische Längsschnitte durch ein Fahrzeugdach in verschiedenen Betriebsstellungen,

Fig. 5 und 6 schematische Draufsichten auf ein Fahrzeugdach in den Betriebsstellungen gemäß den Fign. 1 bzw. 2,

Fig. 7 einen Schnitt entlang der Linie VII—VII der Fig. 5,

Fig. 8 einen Schnitt entlang der Linie VIII—VIII der Fig. 6,

Fig. 9 einen Schnitt entlang der Linie IX—IX der Fig. 7,

Fig. 10 in größerem Maßstab eine Draufsicht auf den in Fig. 9 durch den Pfeil D bezeichneten Bereich,

Fig. 11 einen Schnitt entlang der Linie XI—XI der Fig. 10,

Fig. 12 einen Teillängsschnitt durch ein Fahrzeugdach entsprechend einer abgewandelten Ausführungsform der Erfindung,

Fig. 13 in größerem Maßstab eine Teildraufsicht auf den in Fig. 12 mit F bezeichneten Bereich, und

Fig. 14 einen Teillängsschnitt ähnlich Fig. 12 für eine weiter abgewandelte Ausführungsform der Erfindung.

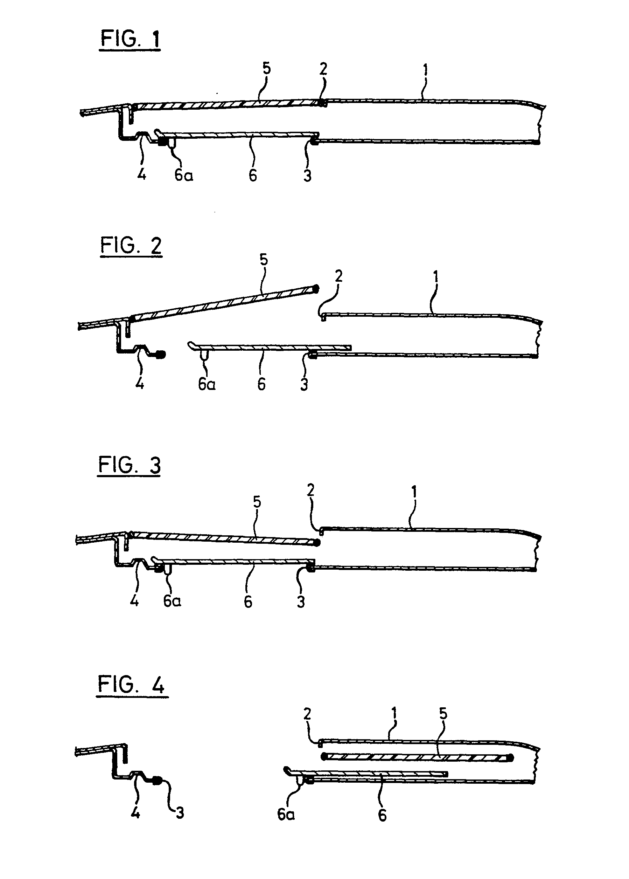

Entsprechend den Fig. 1 bis 9 ist im vorderen Teil der festen Dachfläche 1 eines Fahrzeugdachs ein rechteckiger Dachausschnitt 2 ausgebildet. Unter der Dachfläche 1 sitzt ein Dachrahmen 4, der eine mit dem Dachausschnitt 2 im wesentlichen ausgerichtete Rahmenöffnung 3 begrenzt. Zum wahlweisen Verschließen oder Freigeben des Dachausschnitts 2 ist ein Deckel 5 vorgesehen, der aus opakem Werkstoff, beispielsweise Metall oder Kunstharz, oder einem transparenten oder semitransparenten Werkstoff, beispielsweise Glas oder Kunstharz, gefertigt sein kann. Die Rahmenöffnung 3 läßt sich mittels eines verschiebbaren Himmelteils 6 verschließen, das im Bereich des vorderen zentralen Teils einen nach unten stehenden Griff 6a trägt.

Zwei in Fahrzeuglängsrichtung verlaufende Hauptführungsschienen 7 erstrecken sich an gegenüberliegenden Seiten des Dachrahmens 4. Eine plattenförmige Hilfsführungsschiene 8 reicht von jeder der Hauptfürungsschienen nach innen. Der Deckel 5 ist auf beiden Hauptführungsschienen 7 über vordere und hintere Hauptgleitstücke 11, 12 agbestützt. Er kann nach vorne oder nach hinten geschoben werden. Zwischen dem Deckel 5 und den Hauptgleitstücken 11, 12 befindet sich eine Ausstellvorrichtung 13, die es erlaubt, den Deckel 5 ausgehend von einer den Dachausschnitt 2 verschließenden Stellung um seinen vorderen Teil über die feste Dachfläche 1 auszustellen (Fig. 2 und 8). Vordere und hintere Kulissen 14, 15 sind an beiden Seiten des Deckels 5 angebracht und mit Kulissenschlitzen 16 bzw. 17 versehen. Ein mit dem vorderen Hauptgleitstück 11 verbundener Stift 18 ist in dem Kulissenschlitz 16 der vorderen Kulisse 14 verschiebbar geführt. Ein Ausstellhebel 19 ist mit seinem einen Ende über einen Zapfen 20 an dem hinteren Hauptgleitstück 12 angelenkt. Am anderen Ende des Ausstellhebels 19 sitzen ein in dem Kulissenschlitz 17 der hinteren Kulisse 15 verschiebbar geführter Stift 21 und eine Rolle 22, die in und außer Eingriff mit der Hauptführungsschiene 7 gebracht werden kann. Der Ausstellhebel 19 weist einen Kulissenschlitz 23 auf, der an dem den Stift 21 tragenden Ende offen ist. Eine an der Hauptführungsschiene 7 gelagerte Rolle 24 kann in und außer Gleiteingriff mit dem Kulissenschlitz 23 gebracht werden.

Zum Verstellen der Hauptgleitstücke 11, 12 entlang der Hauptführungsschienen 7 dient ein Antrieb 25, der beispielsweise einen Motor 26 aufweist, welche über eine Kupplungseinrichtung 27 mit zwei Antriebskabeln 28 verbunden ist. Der Motor 26 und die Kupplungseinrichtung 27 sind an dem Dachrahmen 4 vor und benachbart der Rahmenöffnung 3 montiert. Die Antriebskabel 28 werden von dem Motor 26 über die Kupplungseinrichtung 27 angetriebenen. Ein mittlerer Teil jedes Antriebskabels 28 steht mit der Kupplungseinrichtung 27 in Antriebsverbindung. Zu beiden Seiten der Kupplungseinrichtung 27 sind die Antriebskabel 28 in Führungsrohren 29 geführt. Die Antriebskabel 28 verlaufen jeweils zu einer der beiden Hauptführungsschienen 7, und sie sind an den der jeweiligen Schiene 7 zugeordneten Gleitstükken 11, 12 angebracht. Die anderen, freien Enden der Antriebskabel 28 erstrecken sich zu den vorderen Teilen jeweils einer der beiden Hilfsführungsschienen 8.

Wenn sich der Deckel 5 in der den Dachausschnitt 2 verschließenden Stellung befindet (Fig. 1 und 7), liegen die Stifte 18, 21 und die Rollen 24 in Längsrichtung zwischen den Enden der Kulissenschlitze 16, 17 und 23. Die Rollen 22 tauchen in die Hauptführungsschienen 7 ein. Die Hauptgleitstücke 11, 12 lassen sich entlang der Schienen 7 mittels des Motors 26 über die Kupplungseinrichtung 27 und die Antriebskabel 28 nach vorne oder hinten schieben. Werden die Hauptgleitstücke 11, 12 ausgehend von der Schließstellung des Dekkels 5 nach vorne bewegt, verlagern sich die Stifte 18 an den vorderen Hauptgleitstücken 11 in den Kulissenschlitzen 16 der vorderen Kulissen 14 nach vorne. Die Stifte 21 der Ausstellhebel 19 gleiten in den Kulissenschlitzen 17 der hinteren Kulissen 15 nach vorne. Gleichzeitig bewegen sich die Rollen 24 entlang der Kulissenschlitze 23 der Ausstellhebel 19. Die Ausstellhebel 19 werden um die Zapfen 20 nach oben verschwenkt. Die Rollen 22 an den Ausstellhebeln 19 kommen außer Eingriff mit den Hauptführungsschienen 7. Der Deckel 5 wird auf diese Weise um seinen vorderen Teil geschwenkt und in die in den Fig. 2 und 8 veranschaulichte ausgestellte Lage gebracht. Wenn umgekehrt ausgehend von der ausgestellten Stellung des Deckels 5 die Hauptgleitstücke 11, 12 nach hinten geschoben werden, schwenkt der Deckel 5 um seinen vorderen Teil in die Schließstellung.

Werden die Hauptgleitstücke 11, 12 ausgehend von der Schließstellung des Deckels 5 nach hinten bewegt, gleiten die Stifte 18 and den vorderen Hauptgleitstücken 11 entlang der Kulissenschlitze 16 der vorderen Kulissen 14 nach hinten. Die Stifte 21 der Ausstellhebel 19 wandern in den Kulissenschlitzen 17 der hinteren Kulissen 15 nach hinten.

Die Rollen 24 bewegen sich relativ zu den Ausstellhebeln 19 nach vorne und außer Eingriff mit dem Kulissenschlitz 23. Gleichzeitig werden die Ausstellhebel 19 um die Zapfen 20 nach unten verschwenkt. Die an den Ausstellhebeln 19 sitzenden Rollen 22 bewegen sich entlang den Hauptführungsschienen 7 nach hinten. Der Deckel 5 wird infolgedessen um seinen vorderen Teil in die in Fig. 3 veranschaulichte Position nach unten geschwenkt. Werden die Hauptgleitstücke 11, 12 weiter nach hinten bewegt, wandert der Deckel 5 zusammen mit den Hauptgleitstücken 11, 12 nach hinten in die in Fig. 4 veranschaulichte Offenstellung, in welcher er den Dachausschnitt 2 vollständig freigibt. Werden die Hauptgleitstücke 11, 12 ausgehend von der Offenstellung des Deckels 5 nach vorne bewegt, wird der Dekkel 5 umgekehrt in die Schließstellung gebracht.

Wie aus den Fig. 10 und 11 hervorgeht, befinden sich Hilfsgleitstücke 30 zu beiden Seiten des Himmelteils 6. Die Hilfsgleitstücke 30 wirken mit den Hilfsführungsschienen 8 zusammen, so daß das Himmelteil 6 entlang den Hilfsführungsschienen 8 nach vorne oder hinten geschoben werden kann. Wenn sich der Deckel 5 und das Himmelteil 6 in ihren Schließstellungen befinden, liegen die freien Enden der Antriebskabel 28 vor und gegenüber dem jeweils vordersten Hilfsgleitstück 30 auf gegenüberliegenden Seiten des Himmelteils 6. Zweckmäßig haben dabei die freien Kabelenden einen kleinen Abstand von den betreffenden Hilfsgleitstükken 30.

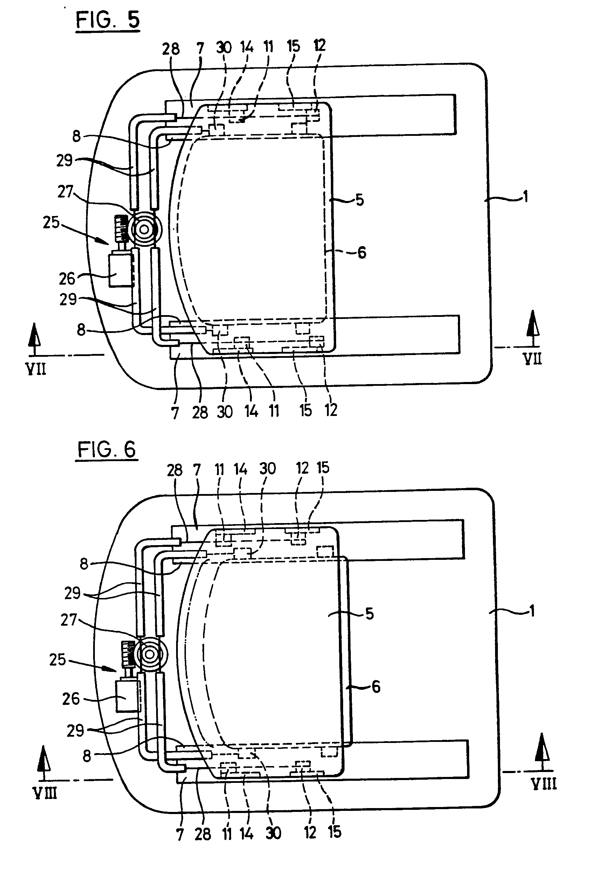

Befinden sich der Deckel 5 und das Himmelteil 6 zunächst in der in Fig. 5 gezeigten Schließstellung und wird ausgehend davon der Deckel 5 durch Vorwärtsschieben der Hauptgleistücke 11, 12 mittels des Motors 26 über die Kupplungseinrichtung 27 und die Antriebskabel 28 in die ausgestellte Lage gebracht, bewegen sich die freien Enden der Antriebskabel 28 nach hinten. Die freien Kabelenden schieben dadurch die vorderen Hilfsgleitstücke 30 auf gegenüberliegenden Seiten des Himmelteils 6 nach hinten, wodurch das Himmelteil 6 bis in eine Stellung zurückbewegt wird, in der es die Rahmenöffnung 3 ein gewisseß Stück freigibt (Fig. 2 und 6). Beispeilsweise kann die Anordnung so ausgelegt sein, daß sich beim Ausstellen des Deckels 5 die hinteren Enden der Antriebskabel 28 um etwa 40 mm nach hinten bewegen und das Himmelteil 6 um eine Strecke von etwa 35 mm mitnehmen. Auch bei in geschlossener Ausgangsstellung befindlichem Himmelteil 6 kann daher das Fahrzeuginnere belüftet werden, indem nur der Deckel 5 nach oben ausgestellt wird. Ein gesondertes Verstellen des Himmelteils 6 erübrigt sich. Die Bedienung des Dachs ist infolgedessen besonders bequem. Weil ferner die Rahmenöffnung 3 nur geringfügig freigegeben wird, ergeben sich keine Probleme durch in das Fahrzeug einfallendes Sonnenlicht, selbst wenn der Deckel 5 aus transparentem oder semitransparentem Werkstoff gefertigt ist.

Wenn sich der Deckel 5 in der ausgestellten Lage befindet, werden die freien Enden der Antriebskabel 28 zu Anschlägen für die vorderen Hilfsgleitstücke 30, wodurch verhindert wird, daß das Himmelteil 6 von Hand in die Schließstellung gebracht wird. Das teilgeöffnete Himmelteil 6 läßt ohne weiteres erkennen, daß der Deckel 5 ausgestellt ist. Dadurch wird die Wahrscheinlichkeit minimiert, daß der Fahrer ein Verschließen des Dachausschnitts 2 mittels des Deckels 5 vergißt.

Bei ausgestelltem Deckel 5 kann das Himmelteil 6, falls erwünscht, von Hand weiter nach hinten geschoben werden. Befindet sich der Deckel 5 nicht in ausgestellter Lage, läßt sich das Himmelteil 6 frei verschieben.

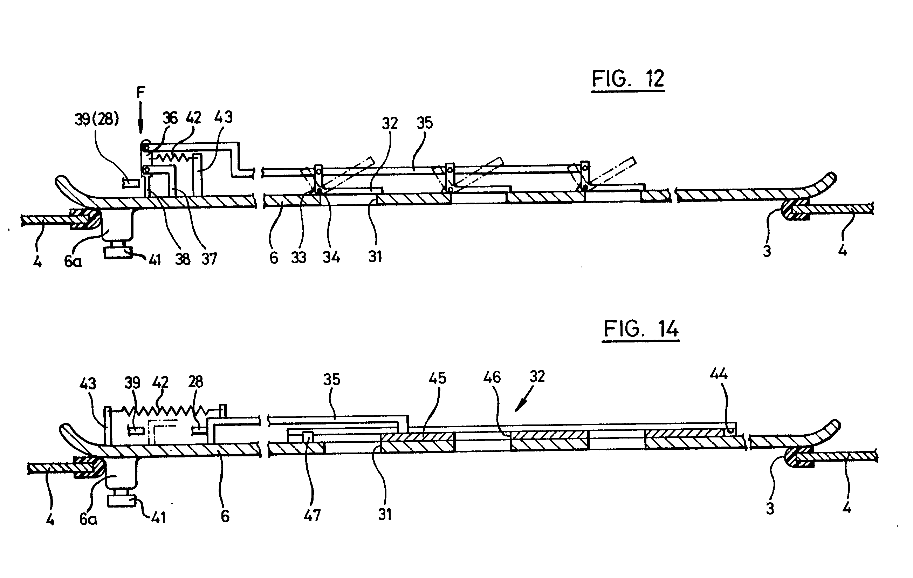

Bei der abgewandelten Ausführungsform nach den Fig. 12 und 13 ist das Himmelteil 6 in einem zwischen seinen Enden liegenden Bereich mit mehreren querverlaufenden, langgestreckten Lüftungsschlitzen 31 versehen, die parallel zueinander verlaufen. Über den Lüftungsschlitzen 31 sitzen mehrere Abdeckungen 32 zum Öffnen oder Verschließen der Lüftungsschlitze 31. Die Abdekkungen 32 sind L-förmig und weisen jeweils einen hochstehenden vorderen Endabschnitt auf. Jede Abdeckung 32 ist in ihrem vorderen unteren Bereich über einen querverlaufenden Stift 34 schwenkbar gelagert, der von Lagerböcken 33 gehalten ist, die an dem Himmelteil 6 angebracht oder angeformt sind. Die Abdeckungen 32 sind im Bereich ihres vorderen hochstehenden Endabschnitts auf mindestens einer Seite mittels einer längsgerichteten Stellstange 35 untereinander verbunden. us vordere Ende der Stellstange 35 liegt über der einen Seite des vorderen Endes des Himmelteils 6, und es ist an dem oberen Ende eines im wesentlichen lotrecht stehenden Hebels 36 angelenkt. Der Hebel 36 ist in seinem mittleren Teil von einem auf dem Himmelteil 6 sitzenden Bügel 37 abgestützt, und um einen querverlaufenden Stift schwenkbar. Das untere Ende des Hebels 36 bildet ein plattenförmiges Betätigungsteil 38, das über dem Seitenabschnitt des Himmelteils 6 und der Hilfsführungsschiene 8 angeordnet ist. Das freie Ende des Antriebskabels 28 steht einem außenliegenden Abschnitt der vorderen Stirnfläche des Betätigungsteils 38 gegenüber, während ein Antriebskabel 39 gegenüber einem innenliegenden Abschnitt der Stirnfläche des Betätigungsteils 38 endet. Die Kabelenden haben einen zweckentsprechenden Abstand von dem Betätigungsteil 38. Das Antriebskabel 39 ist in einem über dem Himmelteil 6 angeordneten Führungsrohr 40 geführt und wird über eine zweckentsprechende Kupplungseinrichtung mittels einer Handhabe 41 betätigt, die an dem Griff 6a des Himmelteils 6 angebracht ist. Eine die Abdeckungen 32 in Schließrichtung vorspannende Rückstellfeder 42 erstreckt sich zwischen einem oberen Teil das Hebels 36 und einem auf dem Himmelteil 6 sitzenden Widerlager 43.

Bei der zuvor erläuterten Ausführungsform werden die Abdeckungen 32 in der Schließstellung mit der Oberseite des Himmelteils 6 in Eingriff gehalten. Wenn ausgehend von den Schließstellungen des Deckels 5 und des Himmelteils 6 der Deckel 5 ausgestellt wird, drückt das freie Ende des Antriebskabels 28 auf das Betätigungsteil 38, um den Hebel 36 zu verschwenken. Dadurch wird die Stellstange 35 nach vorne gezogen; jede der Abdeckungen 32 wird in die in Fig. 12 gestrichelt eingezeichnete Freigabestellung geschwenkt. Der Fahrzeuginnenraum kann auf diese Weise über die Rahmenöffnung 3, die Lüftungsschlitze 31 und den Dachausschnitt 2 belüftet werden. Wenn der Deckel 5 ausgehend von der ausgestellten Lage in die Schließstellung zurückgebracht wird, gibt das freie Ende des Antriebskabels 28 den Hebel 36 frei. Die Rückstellfeder 42 führt die Abdeckungen 32 in die Schließstellung zurück. Um die Abdeckungen 32 von Hand zu öffnen, kann die Handhabe 41 gedreht werden. Dadurch wird das Antriebskabel 39 verstellt, das seinerseits über den Hebel 36 und die Stellstange 35 die Abdeckkungen 32 in der zuvor erläuterten Weise in die Freigabestellung bringt. In entsprechender Weise können die Abdeckungen 32 durch Drehen der Handhabe 41 in die Schließstellung zurückgebracht werden.

Bei der weiter abgewandelten Ausführungsform gemäß Fig. 14 ist eine Abdeckung 32 in Form einer einzigen Platte in Führungsnuten 44 an gegenüberliegenden Seiten des Himmelteils 6 eingesetzt und in Fahrzeuglängsrichtung verschiebbar. Die Abdeckung 32 weist Verschlußteile 45 zum Verschließen der Lüftungsschlitze 31 sowie Öffnungen 46 auf, die mit den Lüftungsschlitzen 31 ausgerichtet werden können. Die Verschlußteile 45 und die Öffnungen 46 wechseln einander in Längsrichtung der Abdeckung 32 ab. Wenn die Abdeckung 32 nach vorne oder hinten geschoben wird, werden die Lüftungsschlitze 31 mittels der Abdeckung freigegeben oder verschlossen. Eine Stellstange 35 reicht von der Abdeckung 32 aus nach vorne. Sie weist ein Betätigungsteil entsprechend dem Betätigungsteil 38 des Hebels 36 auf, mit den die Enden der Antriebskabel 28, 39 in der erläuterten Weise zusammenwirken. Ein Anschlag 47 begrenzt die Verstellbewegung der Abdeckung 32.

Es versteht, sich, daß die vorliegende Erfindung nich auf Schiebehebedächer beschränkt ist. Bei dem Fahrzeugdach kann es sich insbesondere auch um eine Hebedach handeln, das heißt ein Fahrzeugdach mit einem Deckel, der nur entsprechend Fig. 2 ausgestellt, nicht aber unter der festen Dachfläche 1 nach hinten verschoben werden kann. Bei dem Fahrzeugdach kann es sich ferner um ein sogenanntes Spoilerdach handeln, d.h. um ein Fahrzeugdach, bei welchem ein ausstellbarer Schiebedeckel nicht unter, sondern über der festen Dachfläche 1 nach hinten verschiebbar ist, um den Dachausschnitt 2 freizulegen.

**Patentansprüche**

1. Fahrzeugdach mit einem in einer festen Dachfläche (1) ausgebildeten Dachausschnitt (2), einem Deckel (5), der aus einer Schließstellung, in welcher er den Dachausschnitt verschließt, mittels einer Ausstellvorrichtung (13) mit seinem hinteren Ende über die feste Dachfläche in eine Stellung ausstellbar ist, in welcher das hintere Deckelende in Längsrichtung über dem Dachausschnitt steht, einem in Fahrzeuglängsrichtung im wesentlichen parallel zur festen Dachfläche verschiebbaren Himmelteil (6), und einer Mitnehmereinrichtung (30), die beim Ausstellen des Deckels das Himmelteil um eine begrenzte Strecke selbsttätig zurückschiebt, dadurch gekennzeichnet, daß eine Ausstellvorrichtung (13) an jeder Längsseite des Dachausschnitts (2) verschiebbar montiert und mit einem Ende eines drucksteifen Antriebskabels (28) verbunden ist, daß die Mitnehmereinrichtung (30) eine Antriebsverbindung zwischen jedem der beiden Antriebskabel (28) und dem verschiebbaren Himmelteil (6) herstellt, daß ein Dachrahmen (4) vorgesehen ist, der eine unter dem Dachausschnitt liegende Rahmenöffnung (3) begrenzt, daß das verschiebbare Himmelteil (6) in seiner vorderen Endstellung die Rahmenöffnung verschließt und daß das verschiebbare Himmelteil durch das beim Ausstellen des Deckels bewirkte selbsttätige Zurückschieben die Rahmenöffnung mindestens teilweise freilegt.

2. Fahrzeugdach mit einem in einer festen Dachfläche (1) ausgebildeten Dachausschnitt (2), einem Deckel (5), der aus einer Schließstellung, in welcher er den Dachausschnitt verschließt, mittels einer Ausstellvorrichtung (13) mit seinem hinteren Ende über eine feste Dachfläche in eine Stellung ausstellbar ist, in welcher das hintere Deckelende in Längsrichtung über dem Dachausschnitt steht, einem in Fahrzeuglängsrichtung im wesentlichen parallel zur festen Dachfläche verschiebbaren, mit mindestens einer Lüftungsöffnung versehenen Himmelteil (6), und einer Mitnehmereinrichtung (36, 38), die beim Ausstellen des Deckels für eine selbsttätige Freigabe eines Lüftungsschlitzes sorgt, dadurch gekennzeichnet, daß in dem verschiebbaren Himmelteil (6) als Lüftungsöffnung mindestens ein Lüftungsschlitz (31) ausgebildet ist, dem eine Abdeckung (32) zugeordnet ist, die zwischen einer den Lüftungsschlitz freigebenden Stellung und einer den Lüftungsschlitz verschließenden Stellung verstellbar ist, daß eine Ausstellvorrichtung (13) an jeder Längsseite des Dachausschnittes verschiebbar montiert und mit einem Ende eines drucksteifen Antriebskabels (28) verbunden ist, daß die Mitnehmereinrichtung (36, 38) eine Antriebsverbindung zwischen mindestens einem der beiden Antriebskabel (28) und der verstellbaren Abdekkung (32) herstellt, daß ein Dachrahmen (4) vorgesehen ist, der eine unter dem Dachausschnitt liegende Rahmenöffnung (3) begrenzt und daß das verschiebbare Himmelteil (6) in seiner vorderen Endstellung die Rahmenöffnung verschließt.

3. Fahrzeugdach nach Anspruch 1 oder 2, bei dem zu beiden Seiten des Dachausschnitts (2) Führungsschienen (7) verlaufen, entlang denen Gleitstücke (12) verschiebbar geführt sind, die über jeweils eine der Ausstellvorrichtungen (13) mit dem Deckel (5) verbunden und über die Antriebskabel (28) an einen Antrieb (25) angekoppelt sind, und bei dem das freie Ende beider Antriebskabel (28) bzw. mindestens des einen Antriebskabels mit der Mitnehmereinrichtung (30 bzw. 36, 38) zusammenwirkt.

4. Fahrzeugdach nach Anspruch 1 oder 3, bei dem das verschiebbare Himmelteil (6) an beiden Seiten jeweils einen Mitnehmer (30) trägt, gegen den sich bei in Schließstellung befindlichem Himmelteil (6) das freie Ende jeweils eines der Antriebskabel (28), während der Ausstellen des Deckels (5) anlegt.

5. Fahrzeugdach nach Ansprüchen 2 und 3 bei dem in dem Himmelteil (6) mehrere Lüftungsschlitze (31) ausgebildet sind, denen jeweils ein aus einer Schließstellung entgegen einer Federrückstellkraft in die Lüftungsstellung verschwenkbare Abdeckung (32) zugeordnet ist und bei dem die Abdeckungen (32) über eine Schwenkvorrichtung (35, 36) untereinander verbunden sind, die mittels des Endes mindestens eines der Antriebskabel (28) betätigbar ist.

6. Fahrzeugdach nach Ansprüchen 2 und 3, bei dem in dem Himmelteil (6) mehrere Lüftungsschlitze (31) ausgebildet sind, über dem Himmelteil (6) eine plattenförmige Abdeckung (32) angeordnet ist, die aus einer Schließstellung, in welcher die Lüftungsschlitze (31) von Verschlußteilen (45) der Abdeckung (32) überdeckt sind, entgegen einer Federrückstellkraft in die Lüftungsstellung verschiebbar ist, in welcher Öffnungen (46) der Abdeckung (32) mit den Lüftungsschlitzen (31) ausgerichtet sind, und die Abdekkung (32) mit Stellmitteln (35) verbunden ist, die mittels des freien Endes mindestens eines der Antriebskabel (28) betätigbar sind.

7. Fahrzeugdach nach Ansprüchen 2, 5 oder 6, bei dem zusätzlich das Himmelteil (6) samt Abdeckung (32) von Hand verschiebbar ist.

8. Fahrzeugdach nach Ansprüchen 1, 3 oder 4, bei dem die Mitnehmereinrichtung (28, 30) bei ausgestelltem Deckel (5) und dementsprechend zurückgeschobenem Himmelteil (6) eine Anschlaganordnung bildet, die ein Verschieben des Himmelteils in seine Schließ stellung verhindert.

**Revendications**

1. Toit de véhicule avec une découpe de toit (2) réalisée sur une surface du toit fixe (1), un couvercle (5) qui peut être, au moyen d'un dispositif (13) fixé sur sa partie arrière, déplacé sur la surface fixe du toit à partir de sa position de fermeture obturant la découpure du toit, dans une position dans laquelle l'extrémité arrière du couvercle se trouve dans le sens longitudinal au-dessus de la découpe du toit, un élément de pavillon (6) déplaçable dans le sens longitudinal du véhicule essentiellement parallèlement à la surface fixe du toit et un dispositif d'accouplement (30) repoussant pendant la déflexion du couvercle, automatiquement sur un tronçon limité, caractérisé en ce que:

—un mécanisme de déplacement (13) est monté mobile sur chaque côté longitudinal de la découpe de toit (2) et est relié avec une extrémité d'un câble de commande rigide (28),

—le dispositif d'entraînement (30) établit une liaison de commande entre chacun des deux câbles de commande (28) et l'élément de pavillon mobile (6),

—un cadre de toit est prévu, qui délimite une ouverture encadrée (3), située en-dessous de la découpe de toit,

—l'élément de pavillon mobile (6) obture dans sa position extrême avant l'ouverture de cadre, et

—l'élément de pavillon moblle (3) libère au moins partiellement l'ouverture de cadre par son mouvement de recul automatique lors de la déflexion du couvercle.

2. Toit de véhicule avec une découpe de toit (2) réalisée sur une surface de toit fixe (1), un couvercle (5) qui peut être, au moyen d'un dispositif (13) fixé sur sa partie arrière, soulevé sur la surface fixe du toit à partir de sa position de fermeture obturant la découpe du toit dans une position dans laquelle l'extrémité arrière du couvercle se trouve dans le sens longitudinal au-dessus de la découpe du toit, un élément de pavillon (6) muni d'au moins une ouverture d'aération, mobile par rapport à la surface fixe du toit, essentiellement parallèlement à l'axe longitudinal du véhicule, et un dispositif d'accouplement (36, 38), qui dans le mouvement du couvercle pourvoit à l'ouverture automatique d'une grille d'aération, caractérisé en ce que:

—dans l'élément de pavillon mobile (6) on a réalisé comme ouverture d'aération au moins une fente d'aération (31) et à lui-même on a attribué un recouvrement (32) déplaçable entre une position libérant la fente d'aération et une position obturant celle-ci,

—un dispositif de déflecteur (13) est monté mobile sur chaque côté longitudinal de la découpe du toit et est relié à une extrémité d'un câblé de commande rigide (28),

—le dispositif entraîneur (36, 38) établit une liaison de commande entre au moins un des deux câbles de commande (28) et le recouvrement mobile (32),

—un cadre de toit (4) est prévu qui délimite une ouverture de cadre (3) sous la découpe du toit et,

—l'élément de pavillon mobile (6) obture, dans sa position extrême avant, l'ouverture du toit.

3. Toit de véhicule selon une des revendications 1 ou 2, dans lequel des rails de guidage (7) se développent des deux côtés de la découpe du toit (2), rails le long desquels des pièces de glissement (12) mobiles sont guidées, en étant reliées au couvercle (5) respectivement par un des dispositifs de déflecteur (13) et en étant accouplées à une commande (25) par les câbles de commande (28), dans lequel l'extrémité libre des deux câbles de commande (28) ou au moins d'un des deux agit de concert avec les dispositif entraîneur (30 ou 36, 38).

4. Toit de véhicule selon une des revendications 1 ou 3, dans lequel l'élément de pavillon mobile (6) porte sur les deux côtés respectivement un entraîner (30), contre lequel s'appuie pendant le mouvement du couvercle (5) avec l'élément de pavillon (6) se trouvant en position de fermeture, l'extrémité libre respectivement d'un des câbles de commande (28).

5. Toit de véhicule selon les revendications 2 et 3 dans lequel sont réalisés dans l'élément de pavillon (6) plusieurs fentes d'aération (31), auxquelles est associé un cache (32) mobile à partir d'une position de fermeture vers une position d'aération en opposition à une force de ressort de rappel, et dans lequel les caches (32) sont liés les uns aux autres par un dispositif de pivotement (35, 36), qui peut être actionné au moyen de l'extrémité d'au moins un câble de commande (28).

6. Toit de véhicule selon les revendications 2 ou 3, dans lequel sont réalisés plusieurs fentes d'aération (31) dans l'élément de pavillon (6), dans lequel est disposé au-dessus de celui-ci (6) un cache (32) en forme de plaque qui peut être déplacé de la position de fermeture, dans laquelle les fentes d'aération (31) sont recouvertes par les pièces de fermeture (45) du cache (32), à la position d'aération en opposition à la force d'un ressort de rappel, position dan laquelle les ouvertures (46) du cache (32) sont centrées sur les fentes d'aération (31), et le cache (32) étant relié à des moyens de réglage (35), qui peuvent être commandé au moyen de l'extrémité libre d'au moins un des câbles de commande (28).

7. Toit de véhicule selon les revendications 2, ou 6, dans lequel addtionnellement l'élément de pavillon été du cache (32) peut être déplacé manuellement.

8. Toit de véhicule selon les revendications 1, 3 ou 4, dans lequel le dispositif d'entraînement (28, 30) forme un dispositif de butée pour le couvercle (5) déplacé et l'élément de pavillon (6) conformément repoussé en arrière, butée qui empêche un déflecteurde l'élément de pavillon vers sa position de fermeture.

**Claims**

1. Vehicle roof with a roof opening (2) formed in a fixed roof surface (1), a cover (5) which can be tilted open from a closed position in which it closes the roof opening by means of a tilting assembly (13) with its rear end over the fixed roof surface into a position in which the rear cover end projects longitudinally over the roof opening, a sunshade panel (6) displaceable substantially parallel to the fixed roof surface in the vehicle longitudinal direction and a drive means (30), which automatically slides the sunshade panel back by a limited amount on tilting open the cover, characterized in that a tilting assembly (13) is displaceably mounted on each longitudinal side of the roof opening (2) and is connected to one end of a compressively rigid drive cable (28), that the drive means (30) produces a drive connection between each of the two drive cables (28) and the displaceable sunshade panel (6), that a roof frame (4) is provided, which bounds a frame opening (3) located below the roof opening, that the displaceable sunshade panel (6) closes the frame opening in its front end position and that the displaceable sunshade panel at least partly frees or opens the frame opening by the automatic sliding back brought about on tilting open the cover.

2. Vehicle roof with a roof opening (2) formed in a fixed roof surface (1), a cover (5) which can be tilted open from a closed position in which it closes the roof opening, by means of a tilting assembly (13) with its rear end over a fixed roof surface into a position in which the rear cover end projects longitudinally over the roof opening, a sunshade panel displaceable substantially parallel to the fixed roof surface in the vehicle longitudinal direction and provided with at least one ventilation opening and a drive means (36, 38), which on tilting open the cover ensures an automatic freeing of a vent, characterized in that as the ventilation opening at least one vent (31) is formed in the displaceable sunshade panel (6) and with which is associated a closure (32), which is adjustable between a position freeing the vent and a position closing the latter, that a tilting assembly (13) is displaceably mounted on each longitudinal side of the roof opening and is connected to one end of the compressively rigid drive cable (28), that the drive means (36, 38) produces a drive connection between at least one of the two drive cables (28) and the adjustable closure (32), that a roof frame (4) is provided, which bounds a frame opening (3) located below the roof opening and that the displaceable sunshade panel (6) closes the frame opening in its front end position.

3. Vehicle roof according to claims 1 or 2, in which guide rails (7) run on either side of the roof opening (2) and along which are displaceably guided slide members (12), which are connected by means of in each case one of the tilting assemblies (13) to the cover (5) and are coupled via the drive cables (28) to a drive (25) and in which the free end of both drive cables (28) or at least one drive cable cooperates with the drive means (30 or 36, 38).

4. Vehicle roof according to claims 1 or 3, in which the displaceable sunshade panel (6) carries on either side in each case one drive means (30) against which the free end of in each case one of the drive cables (28) during the tilting open of cover (5) when the sunshade panel (6) is in the closed position.

5. Vehicle roof according to claims 2 and 3, in which the sunshade panel (6) has several vents (31), with each of which is associated a closure (32) pivotable from a closed position into the ventilation position counter to a spring restoring force and in which the closures (32) are interconnected by means of a pivoting device (35, 36) operable by means of the end of at least one of the drive cables (28).

6. Vehicle roof according to claims 2 and 3, in which several vents (31) are formed in the sunshade panel (6) and over the latter is arranged a plate-like closure (32), which is displaceable from a closed position, in which the vents (31) are covered by closing parts (45) of closure (32), counter to a spring restoring force into the ventilation position, in which the openings (46) of closure (32) are aligned with the vents (31) and the closure (32) is connected to control means (35), which are operable by means of the free end of at least one of the drive cables (28).

7. Vehicle roof according to claims 2, 5 or 6, in which additionally the sunshade panel (6) and closure (32) is manually displaceable.

8. Vehicle roof according to claims 1, 3 or 4, in which the drive means (28, 30) forms with the cover (5) open and the sunshade panel (6) slid back, a stop means, which prevents a displacement of the sunshade panel into its closed position.

FIG. 1

5
2
1
4
6a
6
3

FIG. 2

5
2
1
4
6a
6
3

FIG. 3

2
1
5
4
6a
6
3

FIG. 4

4
3

2
1
5
6a
6

FIG. 5
28
7
30
14
11
15
12
8
29
27
25
26
29
8
5
6
1
VII
VII
7
28
30
14
11
15
12

FIG. 6
28
7
11
14
30
12
15
8
29
27
25
26
29
8
5
6
1
VIII
VIII
7
28
11
14
30
12
15

FIG. 7
FIG. 8
IX
IX
1
2
4
5
7
11
12
13
14
15
16
17
18
19
20
21
22
23
24
28

FIG. 9
1
2
16
11
18
D
5
14
4
7
28
28
3
8
30
6

FIG. 10
XI
8
30
28
29
6
XI
FIG. 11
30
29
28
8
FIG. 13
29
28
8
40
6
39
38

FIG. 12
4
3
35
32
31
34
33
6
43
42
36
37
38
F
41
39 (28)
6a
4
FIG. 14
4
3
44
32
46
45
31
35
47
6
28
42
39
41
43
6a
4